Europäisches Patentamt

European Patent Office

Office européen des brevets

(11) Publication number : **0 496 710 A1**

# EUROPEAN PATENT APPLICATION

(21) Application number : **92830024.3**

(51) Int. Cl.⁵ : **B01J 47/12, B01J 47/04**

(22) Date of filing : **24.01.92**

Italian Priority claimed Dated 24-01-1991
Application number FI/91/A19.

(30) Priority : **24.01.91**

(43) Date of publication of application :
**29.07.92 Bulletin 92/31**

(84) Designated Contracting States :
**CH DE ES LI SE**

(71) Applicant : **AQUA CHEM S.r.l.**
**Via Nazionale Morolense 4 Km. 3,800**
**I-03023 Ceccano, Frosinone (IT)**

(72) Inventor : **De Martino, Roberto**
**Via Privata Ghiggini 14**
**I-19038 Sarzana (La Spezia) (IT)**

(74) Representative : **Mannucci, Michele et al**
**Ufficio Tecnico Ing.A. Mannucci, Via della**
**Scala 4**
**I-50123 Firenze (IT)**

(54) **Filter compound for the steam condensate from a thermoelectric, conventional or nuclear power station.**

(57)    The subject of the invention is a filter compound for the steam condensate from a thermoelectric, conventional or nuclear power station, which comprises a pulverulent mixture formed by : (a) a weakly acidic cation resin activated by carboxyl groups ; (b) a strong anion exchange resin.

EP 0 496 710 A1

The subject of the invention is a filter compound for the steam condensate from a thermoelectric, conventional or nuclear power station, to be used on condensate treatment plant operating at temperature in the range of 20 to 100 °C.

Thermoelectric, conventional and nuclear power stations require, for filtering the steam condensate and adhering to the stringent feed water specifications, a technology which uses so-called coated filters, in which the filter action with regard to metal oxides and ionised salts is accomplished by pulverulent ion exchange resins and/or inert materials which are deposited, via suitable process lines, on filtration sets of various types which have the purpose to retain the filtration material and to allow the water, which is to be filtered, to pass through.

The most commonly used filtration materials consist of pulverulent ion exchange (sulphonic acid-based cationic, and anionic) resins mixed with cellulose fibres.

The ion exchange resins used in the process for filtration of steam condensate must meet particular requirements regarding purity, with special limits for metallic and organic contaminants.

The resins suitable for use are subjected to a pulverisation process and caused to interact in an aqueous medium to give rise to a clearly apparent flocculation, the product from which, once transferred onto filtration sets, will represent the real coating of the filters.

The steam condensate to be treated passes through the filtration panel thus formed and deposits thereon all the ionic arid-nonionic impurities.

Owing to the retained suspended solids and the exchanged ions, the filtration panel becomes exhausted and therefore requires replacement with fresh material. There are many different disposal methods for the thus exhausted, discharged filtration material, depending on the type of power station in which the products are used.

In particular, in nuclear power stations of the BWR type (boiling water reactors), the exhausted panels containing a certain dose of radioactivity must be subjected to a solification process which is usually effected with bitumen and cement. This demonstrates the considerable cost involved in the final process, which can be quantified at about nine times the cost of fresh resin.

It is thus evident the importance of minimising the quantity of exhausted panels discharged to the solidification plant.

To achieve this, it is necessary to employ carefully selected and qualified products allowing, at the same time, the maximum condensate filtration capacity and minimum consumption of same products.

In the light of experimentation results, the product according to the invention made it possible to achieve this object.

The filter compound according to the invention consists of a mixed product to be used for the filtration of the steam condensate from large thermoelectrical, conventional and/or nuclear units and is obtained by using, rather than strong sulphonic cation resins and cellulose fibres in a mixture with a quaternary ammonium anion resin, a weakly acidic cation resin activated by carboxyl groups -COOH in a mixture with conventional anion resin.

The salient special feature of the product claimed is that up to now, the cation resin consisted of polystyrene-sulfonate resin exhibiting sulfonic groups -SO$_3$H as activation group. The novel cation resin consists of weakly acidic acrylic resin with activation group -COOH in a mixture with anion resins and provides the following advantages at temperatures above 60 °C:

1) The use of weak cation resin enhances the capacity of retaining forms of colloidal oxides and ionized copper which cannot be readily retained by conventional mixtures of resins with inert cellulosic materials.

2) The use of weak cation resin in a mixture with anion resin contributes to the formation of soft and elastic filtration panel able to effectively filter out also oxides usually difficult to be filtered, thereby extending the life of the panel, that is, delaying its exhaustion, and reducing the high rates of hydraulic pressure drops across the filtration panel.

3) On its part, the pulverulent weak cation resin swells gradually as the H+ exchange groups therein are substituted by bivalent Fe ions and copper. This significantly contributes to the retention of the porosity and elasticity in the filtration panel and thus enhance its operating capacity and service life.

4) The mixture thus formulated significantly reduces the number of discharged exhausted panels, with important economic and technical advantages.

5) The cation resin used consists, as stated, of a weak cation resin and is thus characterized by the absence of sulphonic acid groups. The use of this product as a substitute for the conventional strong cation resins actually inhibits the release of sulphonic acid groups from the cation resin when it is inserted in a cycle.

The filter product according to the invention is obtained by mixing the weakly acidic cation resin and the strongly hydroxylic anion resin in ratios from 1:1 to 5:1 on a dry basis.

The term "dry basis" means the quantity of mixed products taken at zero humidity.

The base composition of the filter product claimed consists of:

1) Pulverulent weak cation exchange resin in the hydrogen form, of the formula

$$C_{13}H_{12}COOH$$

2) Pulverulent strong anion exchange resin of the formula

$$C_{12}H_{18}NOH$$

The essential characteristics of the invention are summarized and outlined in the claims; the subjects and advantages thereof will also be evident from the following examples which relate to experiments carried out on pilot plants and real industrial plants.

EXAMPLE 1:

Experiments on the pilot plant.

A first test cycle was carried out using a pilot plant equipped with a 70″ No. 1 polypropylene filter element, altogether identical to filter elements installed in industrial plants.

The filter element was contained in a transparent prototype filter in order to allow better observation of the behaviour of the filter material used.

The pilot plant was capable of being fed with cold or hot deionised water.

Since it was the object of the research to verify the behaviour of the filter under conditions similar to those existing in a BWR condensate treatment circulation system, some of the chemical-physical parameters verifiable in such a circulation were reproduced in the course of the tests. The results obtained in various experimental cycles were carried out under the following operating conditions:

– Temperature of the experiment: 20 to 87 °C.
– Specific capacity of the experiment: 6 $m^3/h/m^2$ of filtration surface area.
– Pressure drop across the freshly prepared filter panel: 20-22 m.c.l.
– Quantity of filter material, dry basis: 1000 $g/m^2$.
– Composition of the filter material used: cation/anion resins in a 2:1 ratio.

The results obtained in the pilot plant tests can be summarized as follows:

The insertion of several panels prepared with the above indicated product in a neutral cycle did not lead, even at a maximum temperature of 87 °C, to an increase in the acid conductivity downstream of the filter panels, which demonstrates the high-temperature stability of the products used.

The coatings carried out showed a remarkable homogeneity of the filter panels and thus demonstrated the absolute adaptability of the filter product to the filter elements used industrially.

The positive results made it possible to carry out some tests in a nuclear BWR circulation system as indicated in Example 2.

EXAMPLE 2:

Experiments on a nuclear plant.

The experiments carried out on the industrial scale on No. 1 filter in a nuclear power station confirmed the positive data already obtained on the pilot scale and, in addition, showed that the values of conductivity on insertion, of iron and copper retention and mean life of the panels were largely positive and better than the results obtainable by using conventional strong cation resins and mixtures with cellulose fibres.

The most important data were those obtained on the following condensates.:

– Specific capacity of the filters: 6.2 $m^3/h/m^2$.
– Application temperature: 85 °C.
– Total iron at the inlet of the filters in the middle of the cycle: 15 ppb.
– Total iron at the outlet from the filters in the middle of the cycle: 0.02 ppb.
– Mean cycle life of the filters: 65 days.
– Composition of the filter product: cation/anion resins in a 2:1 ratio.

The data given are sufficient for an assesment of the functioning of these novel product mixtures, which are superior to any other product type based on the pulverulent ion exchange resins used hitherto.

Although the present invention may be stated on the basis of what has been described and illustrated above, many modifications and variants are possible in the realisation of the invention; such modifications and variants must, however, be considered as being based on the claims which follow:

## Claims

1) Filter compound for the steam condensate from a thermoelectric, conventional or nuclear power station, characterized in that it comprises a pulverulent mixture formed by: (a) a weakly acidic cation resin activated by carboxyl groups, (b) a strong anion exchange resin.

2) Filter compound for the steam condensate from a thermoelectric, conventional or nuclear power station, according to the preceding claim, characterized in that said weakly acidic cation resin activated by carboxyl groups, is of the following formula:

$$C_{13}H_{12}COOH$$

3) Filter compound for the steam condensate from a thermoelectric, conventional or nuclear power station, according to claim 1, characterized in that said strong anion exchange resin is a quaternary ammonium anion resin of the following formula:

$$C_{12}H_{18}NOH$$

4) Filter compound for the steam condensate from a thermoelectric, conventional or nuclear power station, according to claim 1, characterized in that the weight ratio, on a dry basis, of the weakly acidic cation resin and the strong anion exchange resin is between 1:1 and 5:1.

5) Filter compound for the steam condensate from a thermoelectric, conventional or nuclear power station, according to the preceding claims, realised and installed as above described.

**European Patent Office**

## EUROPEAN SEARCH REPORT

Application Number

EP    92 83 0024

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 155 384 (THE GRAVER CO.) <br> * page 5, line 4 - page 7, line 27 * | 1,4,5 | B01J47/12 <br> B01J47/04 |
| A | * page 24, line 15 - page 27, line 16 * <br> --- | 2,3 | |
| A | US-A-5 024 767 (KUBO) <br> * column 2, line 1 - column 4, line 6 * <br> * column 6 - column 8; claims 1-13 * <br> --- | 1-5 | |
| A | DE-A-1 920 497 (BAYER) <br> * page 1, line 1 - page 3 * <br> --- | 1-5 | |
| A | EP-A-0 056 850 (KERNFORSHUNGSZENTRUM KARLSRUHE) <br> * claims 1-5 * <br> ----- | 1,4 | |
| | | | TECHNICAL FIELDS SEARCHED (Int. Cl.5) |
| | | | B01J |

The present search report has been drawn up for all claims

| Place of search | Date of completion of the search | Examiner |
|---|---|---|
| THE HAGUE | 08 APRIL 1992 | WENDLING J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P0401)